# EUROPÄISCHE PATENTSCHRIFT

(11) **EP 0 767 359 B1**
(45) Veröffentlichungstag und Bekanntmachung des Hinweises auf die Patenterteilung: **02.02.2000**
(21) Anmeldenummer: 96112693.5
(22) Anmeldetag: 07.08.1996
(51) Int. Cl.: G01D 5/38

(54) **Photoelektrische Längen- oder Winkelmesseinrichtung**
Photo-electrical length or angle measuring device
Dispositif photo-électrique pour mesurer une longueur ou un angle

(30) Priorität: 07.10.1995 DE 19537416
(43) Veröffentlichungstag der Anmeldung: 09.04.1997
(73) Patentinhaber: Dr. Johannes Heidenhain GmbH, 83292 Traunreut (DE)
(72) Erfinder: Huber, Walter, Dipl.-Ing., 83278 Traunstein (DE)

(56) Entgegenhaltungen:
- WO-A-87/07944
- DE-A- 2 207 132
- DE-A- 4 303 162
- US-A- 3 700 907

## Beschreibung

Bekannte photoelektrische Längen- und Winkelmeßsysteme umfassen üblicherweise eine Abtasteinheit mit mehreren Abtastfeldern, die in Form von Abtastgittern ausgeführt sind. Relativ verschiebbar hierzu ist ein Maßstab angeordnet, so daß bei einer resultierenden Relativbewegung positionsabhängige Meßsignale erzeugbar sind. Die einzelnen Abtastfelder sind relativ zueinander um einen bestimmten Bruchteil der Gitterkonstante des abgetasteten Maßstabes verschoben angeordnet, so daß bei Abtastung des Maßstabes an den Detektorelementen, die den Abtastfenstern zugeordnet sind, definiert phasenverschobene Signale anliegen. Über eine den Detektorelementen nachgeordnete Auswerteelektronik ist es möglich, sowohl den Betrag als auch die Richtung der Relativbewegung von Maßstab und Abtasteinheit zueinander zu bestimmen.

Bei derart aufgebauten photoelektrischen Meßsystemen gelangt jeweils Licht auf die Detektorelemente, das aus unterschiedlichen Bereichen des abgetasteten Maßstabes stammt, d.h. die phasenverschobenen Signalanteile stammen nicht aus den gleichen Maßstabbereichen. Weisen die verschiedenen Maßstabbereiche nunmehr lokale Verschmutzungen, örtlich ungleichmäßige Maßstabteilungen oder sonstige lokal unterschiedliche Eigenschaften auf, so wirkt sich dies nachteilig auf die Signalqualität aus. Insbesondere ergeben sich etwa unerwünschte Änderungen der Tast- und/oder Amplitudenverhältnisse bei den phasenverschobenen Signalen, die aus den verschiedenen Maßstabbereichen stammen; dies hat letztendlich Meßfehler zur Folge.

Zur Lösung dieser Problematik sind nunmehr bereits eine Reihe von Möglichkeiten bekannt. So wird in der EP 0 163 362 ein sogenanntes interferentielles Meßsystem beschrieben, bei dem drei jeweils um 120° phasenversetzte Ausgangssignale aus einem gemeinsamen Feld der Abtasteinheit erzeugt werden, so daß eventuelle lokale Veränderungen auf der Maßstabseite alle Signale gleichmäßig beeinflussen. Aufgrund des gewählten Abtastprinzipes liegen die drei resultierenden Ausgangssignale jedoch mit einem unterschiedlichen Modulationsgrad vor. Im Fall lokal differierender Bedingungen auf Seiten des Maßstabes ergeben sich deshalb auch bei einem derartigen Meßsystem Schwankungen der Tast- und Amplitudenverhältnisse in den drei Ausgangssignalen.

Ein weiterer Ansatz zur Lösung der angesprochenen Problematik ist aus der DE 43 03 162 bekannt. Dort wird vorgeschlagen, jedem der vorgesehenen Detektorelemente der Abtasteinheit jeweils ein Paar von Abtastgittern zuzuordnen, wobei die Abtastgitter relativ zum Maßstabgitter einen Winkel bilden. Dieser Winkel ist so gewählt, daß die Abtastgitter die einfallenden Lichtbündel in Richtung des gleichen Maßstabbereiches umlenken bzw. beugen. Sämtliche phasenverschobenen Signale, die an den Detektoren erfaßt werden, stammen somit aus dem gleichen Maßstabbereich. Nachteilig an diesem Lösungsansatz ist jedoch, daß aufgrund der erforderlichen großen Beugungswinkel sehr kleine Teilungsperioden der Abtastgitter nötig sind, was wiederum eine aufwendige Herstellung bedingt. Zudem erweist sich die vorgeschlagene Anordnung als relativ empfindlich gegenüber Schwankungen im Abtastabstand.

Aus der DE 22 07 132 ist ferner eine Ausgestaltung einer Gitterabtastplatte für ein photoelektrisches Positionsmeßsystem bekannt. Hierbei sind auf einer Seite der Abtastplatte phasenversetzte Teilungsspuren zur Abtastung eines Gittermaßstabes angeordnet; auf der Rückseite der Abtastplatte sind den Teilungsspuren zugeordnete Prismen angeordnet, über die eine Ablenkung der Strahlenbündel auf ein einziges Abtastfeld des Maßstabes erfolgt. Nachteilig an dieser Variante ist die nicht-optimale Signalintensität bzw. Energiebilanz.

Der vorliegenden Erfindung liegt daher die Aufgabe zugrunde, die erwähnten Nachteile bei photoelektrischen Längen- oder Winkelmeßeinrichtungen zu beseitigen, d.h. gefordert ist die Unempfindlichkeit eines derartigen Meßsystemes gegenüber lokalen Veränderungen auf der abgetasteten Maßstabteilung. Darüber hinaus soll eine relative Unempfindlichkeit gegenüber Variationen im Abtastabstand ebenso gewährleistet sein wie eine einfache Fertigung der Abtasteinheit.

Diese Aufgabe wird gelöst durch eine Längen- oder Winkelmeßeinrichtung mit den Merkmalen des Anspruches 1.

Mögliche Ausführungsformen der erfindungsgemäßen Längen- oder Winkelmeßeinrichtung ergeben sich aus den Maßnahmen in den abhängigen Ansprüchen.

Mit Hilfe der erfindungsgemäßen Längen- oder Winkelmeßeinrichtung werden nunmehr wenigstens zwei phasenverschobene Ausgangssignale erzeugt, die jeweils aus der Abtastung des gleichen Maßstabbereiches resultieren. Hierzu ist vorgesehen, auf Seiten der Abtasteinheit neben den Teil-Abtastfeldern davon räumlich getrennte, richtungsselektiv wirkende Ablenkmittel anzuordnen, die eine Ablenkung der Teilstrahlenbündel verschiedener Teil-Abtastfelder in den gleichen Maßstabbereich bewirken. Sämtliche phasenverschobenen Signale stammen somit aus dem gleichen abgetasteten Maßstabbereich, so daß sich z.B. lokale Verschmutzungen auf dem Maßstab nicht mehr nachteilig auf die verschiedenen, phasenverschobenen Signale auswirken. Es resultiert demzufolge eine sogenannte Einfeldabtastung, bei der die auszuwertenden phasenverschobenen Signale allesamt gleich von eventuell vorhandenen lokalen Unregelmäßigkeiten der Maßstabstruktur beeinflußt werden.
Durch die entsprechende Ausgestaltung der Abtasteinheit lassen sich in der erfindungsgemäßen Längen- oder Winkelmeßeinrichtung die Amplituden, Phasenbeziehungen sowie Modulationsgrade der Ausgangssignale in gewünschter Art und Weise einstellen.

Innerhalb von photoelektrischen Längen- oder Winkelmeßeinrichtungen sind den Abtasteinheiten zugeordnete richtungsselektive Mittel, ausgeführt als Prismenkeile, beispielsweise aus der EP 0 223 009 oder aber aus der Dissertation von J. Willhelm (Seite 65) bereits bekannt. Jedoch bewirken diese dort keine Umlenkung der verschiedenen Teilstrahlenbündel unterschiedlicher Abtastfelder auf die gleichen Maßstabbereiche, d.h. es ist dort jeweils keine Einfeldabtastung vorgesehen, sondern lediglich die zur Detektion notwendige räumliche Trennung der phasenversetzten Signalanteile.

Die erfindungsgemäße Längen- und Winkelmeßeinrichtung kann sowohl als interferentielles Meßsystem gemäß der EP 0 163 362 ausgebildet sein, wie auch als photoelektrisches Meßsystem, das z.B. im Schattenwurf betrieben wird.

Weitere Vorteile sowie Einzelheiten der vorliegenden Erfindung ergeben sich aus der nachfolgenden Beschreibung von Ausführungsbeispielen anhand der beiliegenden Zeichnungen.

Dabei zeigt
- Figur 1: die schematisierte Darstellung des Strahlengangverlaufs einer Längen- oder Winkelmeßeinrichtung;
- Figur 2: die Vorder- und Rückseite einer Abtastplatte, die in der Längen- oder Winkelmeßeinrichtung aus Figur 1 eingesetzt wird;
- Figur 3: die schematisierte Darstellung des Strahlengangverlaufs einer ersten Ausführungsform der erfindungsgemäßen Längen- oder Winkelmeßeinrichtung;
- Figur 4: eine Ansicht des verwendeten Maßstabes in der ersten Ausführungsform gemäß Figur 3;
- Figur 5: die Anordnung der Detektorelemente in der ersten Ausführungsform gemäß Figur 3;
- Figur 6: die schematisierte Darstellung des Strahlengangverlaufs einer zweiten Ausführungsform der erfindungsgemäßen Längen- oder Winkelmeßeinrichtung, die im Durchlicht betrieben wird.

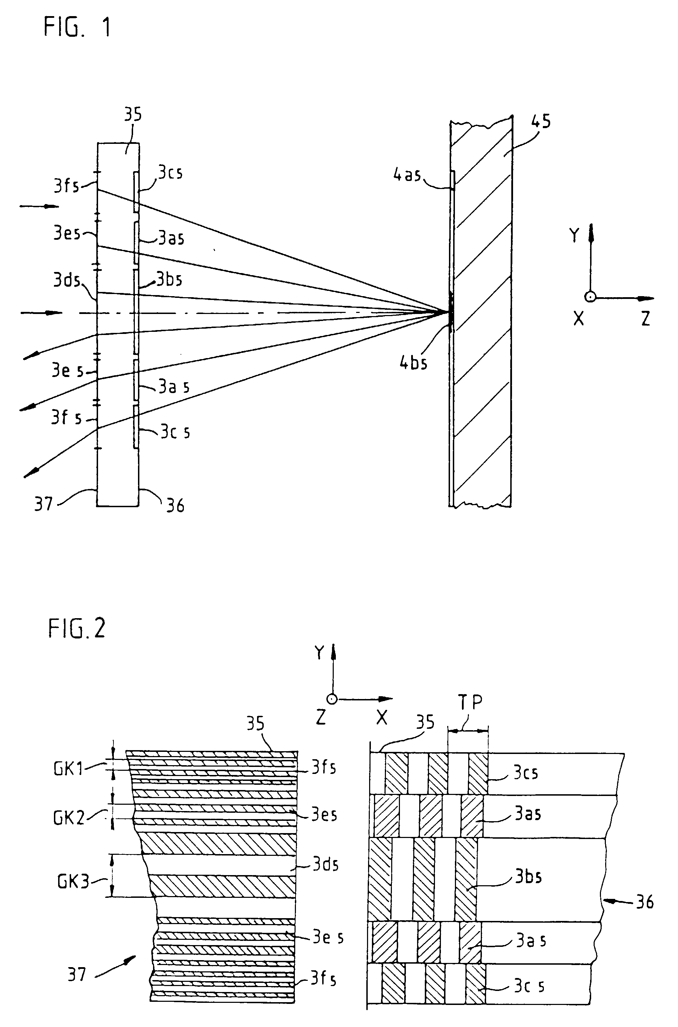

Der Strahlengangverlauf in einer Längen- oder Winkelmeßeinrichtung ist in Figur 1 stark vereinfacht dargestellt. Hierbei ist eine Ausführung als interferentielles Meßsystem vorgesehen, das nach dem Prinzip eines Dreigittergebers arbeitet, wie er z.B. aus der EP 0163 362 bekannt ist. Die mit der Koordinate X bezeichnete Meßrichtung dieses Ausführungsbeispieles ist senkrecht zur Zeichenebene orientiert, das heißt die Abtastplatte 35 und der Maßstab 45 werden in X-Richtung relativ zueinander verschoben. Im dargestellten Beispiel ist die Längen- oder Winkelmeßeinrichtung als Auflicht-Meßsystem ausgebildet, was jedoch nicht erfindungsspezifisch ist. Von der Abtasteinheit ist in der Darstellung der Figur 1 lediglich die Abtastplatte erkennbar.

Das von einer Lichtquelle emittierte und über eine geeignete vorgeordnete Optik kollimierte Licht durchtritt zunächst die Abtastplatte 35 und trifft auf den reflektierend ausgelegten Maßstab 45 auf, von dem es reflektierend gebeugt wird und ein weiteres Mal die Abtastplatte 35 passiert. Nach dem zweiten Durchtreten der Abtastplatte 35 gelangen die Lichtbündel auf ebenfalls nicht dargestellte Detektorelemente, die die im Fall einer Relativbewegung positionsabhängig modulierten Signale erfassen.

Um die gewünschte Einfeldabtastung sicherzustellen sind nunmehr auf Seiten der Abtastplatte 35 bestimmte Maßnahmen vorgesehen, die nachfolgend erläutert werden sollen. So sind auf der Abtastplatte 35 auf derjenigen Seite 36, die dem Maßstab 45 zugewandt ist, in Y-Richtung benachbarte parallele Spuren angeordnet, die die einzelnen Teil-Abtastfelder 3a5, 3b5, 3c5 darstellen. Die Teil-Abtastfelder 3a5, 3b5, 3c5 sind in Form von Abtastgittern ausgebildet, wobei die jeweiligen Gitterstriche in Y-Richtung orientiert sind. Den verschiedenen Teil-Abtastfeldern 3a5, 3b5, 3c5 wiederum sind nicht dargestellte Detektorelemente, ausgebildet als Photoelemente zugeordnet. Ebenfalls in Y-Richtung sind auch die Gitterstriche der Maßstabteilung 4a5 auf dem Maßstab 45 angeordnet. Die verschiedenen Teil-Abtastfelder 3a5, 3b5, 3c5 der Abtastplatte 35 sind ferner relativ zueinander derart angeordnet, daß ein definierter Phasenversatz in den den Teil-Abtastfeldern 3a5, 3b5, 3c5 zugeordneten Signalen resultiert. Hierzu ist ein Relativversatz der Gitterstriche benachbarter Teil-Abtastfelder 3a5, 3b5, 3c5 um einen definierten Bruchteil der Teilungsperiode TP der Teil-Abtastfelder 3a5, 3b5, 3c5 vorgesehen, der im Beispiel gemäß Figur 1 jeweils 1/6 der Teilungsperiode TP der Maßstabteilung 4b5 beträgt. Die Teilungsperioden der verschiedenen Teil-Abtastfelder 3a5, 3b5, 3c5 sind im übrigen identisch zueinander als auch identisch mit der Teilungsperiode TP der Maßstabteilung 4b5 gewählt. Symmetrisch und parallel zum mittleren Teil-Abtastfeld 3b5 sind benachbart jeweils die beiden Spuren mit den Teil-Abtastfeldern 3a5 sowie 3c5 angeordnet, so daß mit Hilfe einer derart ausgebildeten Abtastplatte 35 innerhalb eines interferentiellen Meßsystems gemäß der EP 0 163 362 insgesamt drei um jeweils 120° zueinander phasenverschobene Abtastsignale gewonnen werden können.

Eine Ansicht der Frontseite 36 der Abtastplatte 35 ist im rechten Teil der Figur 2 dargestellt, um die erläuterte Ausgestaltung dieser Seite der Abtastplatte 35 zu veranschaulichen. Deutlich erkennbar ist hierbei die versetzte Anordnung der einzelnen Teil-Abtastfelder 3a5, 3b5, 3c5 sowie die Symmetrie bezüglich des mittleren Teil-Abtastfeldes 3b5.

Auf der Rückseite 37 der Abtastplatte 35 sind räumlich richtungsselektiv wirkende Ablenkmittel 3d5, 3e5, 3f5 angeordnet, die jeweils eindeutig den verschiedenen Teil-Abtastfeldern 3a5, 3b5, 3c5 auf der Vorderseite der Abtastplatte 35 zugeordnet sind. Hierbei liegt eine räumlich getrennte Ausbildung der Ablenkmittel 3d5, 3e5, 3f5 und der Teil-Abtastfelder 3a5, 3b5, 3c5 vor. Wie aus dem linken Teil der Figur 2 hervorgeht, die die Rückseite 37 der Abtastplatte 35 zeigt, sind die richtungsselektiv wirkenden Ablenkmittel 3d5, 3e5, 3f5 in Form von Gitterteilungen ausgebildet, deren Teilungsstriche parallel zur Meßrichtung X orientiert sind und demzufolge eine Transversalablenkung der durchtretenden Lichtbündel bewirken. Jedem der Teil-Abtastfelder 3a5, 3b5, 3c5 auf der Vorderseite 36 der Abtastplatte 35 ist ein räumlich getrenntes Ablenkmittel 3d5, 3e5, 3f5 mit einer bestimmten Ablenkwirkung auf der Rückseite 37 der Abtastplatte zugeordnet, was in der dargestellten Ausführungsform durch die unterschiedliche Wahl der Gitterkonstanten GK1, GK2, GK3 der Ablenkmittel 3d5, 3e5, 3f5 erreicht wird. Entsprechend zur symmetrischen Anordnung der Teil-Abtastfelder 3a5, 3b5, 3c5 auf der Vorderseite 36 ist auch die Symmetrie der Ablenkmittel 3d5, 3e5, 3f5 auf der Rückseite 37 der Abtastplatte 35 gewählt, d.h. die den beiden Teil-Abtastfeldern 3a5 auf der Vorderseite 36 zugeordneten Ablenkmittel 3e5 auf der Abtastplatten-Rückseite 37 weisen jeweils die gleiche Ablenkwirkung auf usw..
Die richtungsselektiv wirkenden Ablenkmittel 3d5, 3e5, 3f5 auf der Rückseite 37 der Abtastplatte 35 sind derart dimensioniert, daß die einfallenden Lichtbündel sämtlicher Teil-Abtastfelder 3a5, 3b5, 3c5, die die phasenverschobenen Signalanteile liefern, auf einen gemeinsamen Teilbereich 4b5 der abgetasteten Maßstabteilung 4a5 umgelenkt werden und damit die gewünschte Einfeldabtastung gewährleisten.
Nach dem zweiten Durchgang der Lichtbündel durch die Abtastplatte 35 und der erfolgenden nochmaligen Beugung liegen die phasenverschobenen Signalanteile räumlich getrennt vor und können in der Brennebene der Kondensoroptik detektiert werden.
Hinsichtlich der Ausbildung der richtungsselektiv wirkenden Ablenkmittel 3d5, 3e5, 3f5 auf der Rückseite 37 der Abtastplatte 35 gibt es grundsätzlich verschiedene Möglichkeiten. So sind etwa die in Figur 1 und 2 dargestellten Ablenkmittel 3d5, 3e5, 3f5 in Form von binären Phasengittern ausgebildet. Daneben ist es möglich, hierfür auch geblazte Phasengitter, refraktive optische Elemente, diffraktive optische Elemente, holographisch optische Elemente etc. einzusetzen.

Die in Form von Teil-Abtastfeldern 3a5, 3b5, 3c5 ausgebildete Abtaststruktur auf der Vorderseite 36 der Abtastplatte 35 sowie die richtungsselektiv wirkenden Ablenkmittel 3d5, 3e5, 3f5 auf der Rückseite 37 der Abtastplatte 35 sind räumlich getrennt voneinander angeordnet. Alternativ zur Darstellung in Figur 1 bzw. 2 ist es grundsätzlich auch möglich, durch Anwendung eines mehrstufigen Photolithographieprozesses die erforderlichen Abtast- und Ablenkstrukturen räumlich getrennt auf der gleichen Seite eines Trägersubstrates anzuordnen.

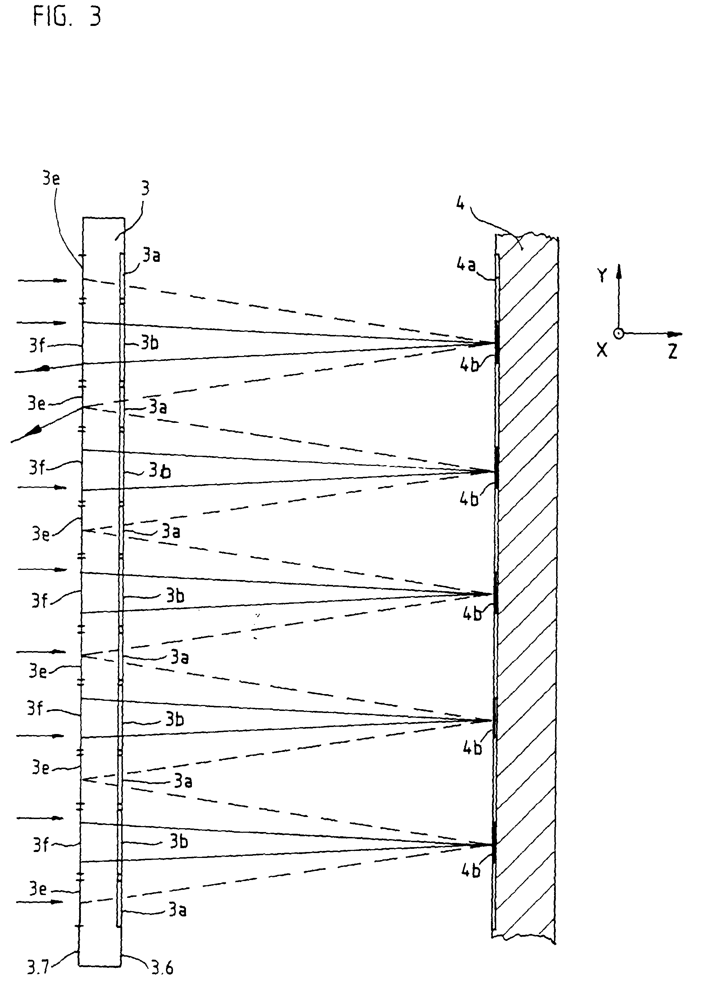

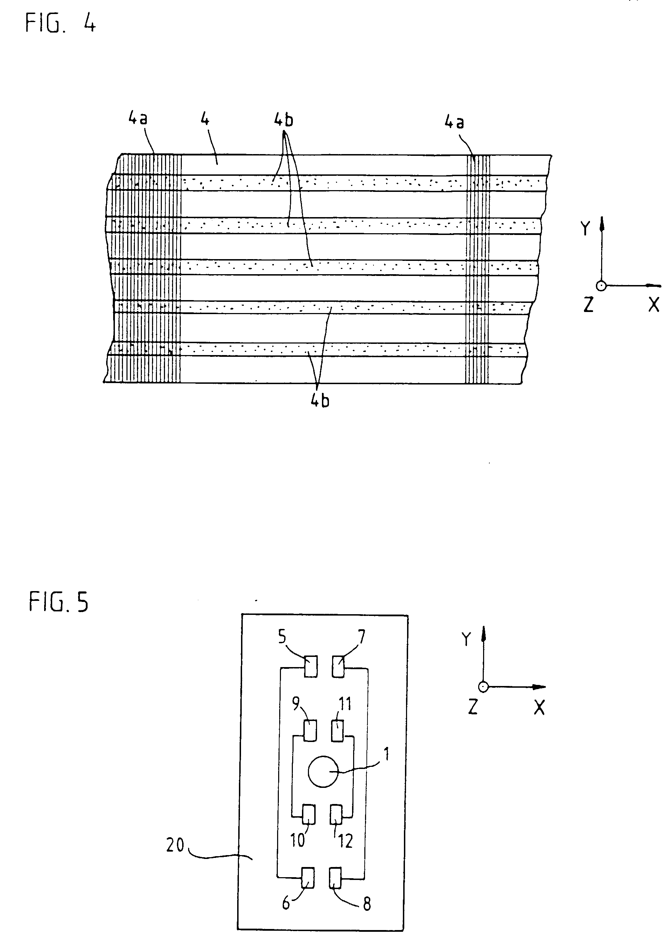

Der Strahlengangverlauf einer ersten Ausführungsform der erfindungsgemäßen Längen- oder Winkelmeßeinrichtung ist in Figur 3 dargestellt. Eine Abtastplatte 3 ist gemäß dem Beispiel aus Figur 1 ausgebildet, um eine Einfeldabtastung eines Maßstabes 4 zu ermöglichen, der mit einer Maßstabteilung 4a versehen ist. Die Erzeugung der phasenverschobenen Signalanteile basiert auf dem Prinzip eines interferentiellen Meßsystems, wie es etwa aus der EP 0 163 362 bekannt ist.
Hierzu sind auf der Vorderseite 3.6 der Abtastplatte 3 parallel angeordnete Teil-Abtastfelder 3a, 3b in Form von parallel zueinander angeordneten Abtastteilungen vorgesehen. Im Gegensatz zum Beispiel in Figur 1 sind lediglich zwei verschiedene, in Meßrichtung x zueinander versetzte Abtastteilungen angeordnet. Die Orientierung der Teilungsstriche der Teil-Abtastfelder 3a, 3b ist hierbei identisch zum vorab erläuterten Ausführungsbeispiel. Symmetrisch zum Teil-Abtastfeld 3b sind die beiden identischen Teil-Abtastfelder 3a angeordnet. Zur gewünschten Erzeugung der um 90° phasenversetzten Ausgangssignale ist mindestens eine Abtastfeld-Einheit aus dem mittleren Teil-Abtastfeld 3a und den zwei symmetrisch angeordneten Teil-Abtastfeldern 3b erforderlich. Die Anordnung dieser Abtastfeld-Einheiten 3a, 3b, 3a wiederholt sich nunmehr in Y-Richtung mehrfach, was insgesamt eine Verbesserung der Energiebilanz auf der Detektorseite bewirkt.
Der Versatz der Teil-Abtastfelder 3a, 3b zueinander beträgt ein Viertel der Teilungsperiode der gewählten Abtastteilungen in Meßrichtung X. In Verbindung mit dem interferentiellen Meßprinzip eines Dreigittergebers gemäß der EP 0 163 362 ergeben sich um 180° zueinander phasenverschobene Signalanteile aus diesen beiden Teil-Abtastfeldern, die aufgrund der in Y-Richtung wirkenden Transversalablenkung durch die Ablenkmittel 3e, 3f räumlich getrennt vorliegen. Da die Ablenkmittel 3e, 3f so ausgelegt sind, daß eine Ablenkung in die +/- 1. Beugungsordnung resultiert, ergeben sich demzufolge vier in Y-Richtung separierte, zu detektierende Signalanteile. Ferner läßt sich durch die Dimensionierung der Abtastgitter 3a, 3b auf lediglich +/- 1. Beugungsordnungen eine Aufspaltung der aus einem Teil-Abtastfeld 3a, 3b stammenden Siganlanteile in Meßrichtung X bewirken, wobei sich ein Phasenversatz der getrennten Signalanteile von 90° ergibt. Die vier, in Y-Richtung getrennten Signalanteile werden dadurch demzufolge noch paarweise in X-Richtung aufgespalten, so daß letztlich acht verschiedene Signalanteile mit bestimmten Phasenverschiebungen resultieren, die über entsprechend angeordnete Detektorelemente erfaßt und weiterverarbeitet werden können. Hinsichtlich der geeigneten Verschaltung und Anordnung der Detektorelemente sei in diesem Zusammenhang auf die nachfolgend noch zu beschreibende Figur 5 verwiesen. Ausgangsseitig resultieren bei einer derartigen Abtastplatten-Ausgestaltung nach der entsprechenden Weiterverarbeitung der acht phasenverschobenen Signalanteile zwei um 90° phasenversetzte Ausgangssignale, die zur Positionsbestimmung in bekannter Art und Weise ausgewertet werden können.

Auf der dem einfallenden Licht zugewandten Seite 3.7 der Abtastplatte 3 sind wiederum die richtungsselektiv wirkenden Ablenkmittel 3e, 3f angeordnet, die eine Ablenkung der eintretenden Lichtstrahlenbündel benachbarter Abtastfelder 3a, 3b jeweils in den gleichen, beaufschlagten Maßstabbereich 4b bewirken. Hierbei ist jedem der beiden Teil-Abtastfelder 3a, 3b ein räumlich getrenntes, richtungsselektiv wirkendes Ablenkmittel 3e, 3f zugeordnet. Die Ausbildung der Ablenkmittel 3e, 3f ist in Form binärer Phasengitter unterschiedlicher Teilungsperiode vorgesehen, deren Teilungsstruktur parallel zur Meßrichtung X orientiert ist. Die Ablenkmittel 3e, 3f weisen wiederum eine ablenkende Wirkung dergestalt auf, daß die Signalanteile von Teil-Abtastfeldern 3a, 3b, die die phasenverschobenen Signalanteile liefern, aus dem gleichen Maßstabbereich 4b stammen.

Eine Ansicht des verwendeten Maßstabs 4 im Ausführungsbeispiel gemäß Figur 3 ist in Figur 4 gezeigt. Strichpunktiert sind dabei diejenigen Teilbereiche 4b des Maßstabes 4 dargestellt, aus denen jeweils die phasenverschobenen Signale benachbarter Teil-Abtastfelder erzeugt werden. Eine eventuelle Verschmutzung oder Abdeckung eines Teilbereiches des Maßstabes bewirkt dabei keine ungleichmäßige Beeinflussung von Signalanteilen lediglich einer bestimmten Phasenlage. Wird beispielsweise aufgrund einer lokalen Verschmutzung im untersten strichpunktierten Maßstabbereich ein Teil des Maßstabes abgedeckt, so hat dies lediglich Auswirkungen auf die resultierende Gesamtintensität, da alle an der Signalgewinnung beteiligten, phasenverschobenen Signalanteile in diesem Teilbereich gleich beeinflußt werden. Zur Signalgewinnung stehen jedoch alle phasenverschobenen Signalanteile aus den darüberliegenden strichpunktierten Teilbereichen weiterhin zur Verfügung.

Eine Detektoranordnung, die in Verbindung mit der Ausführungsform der Abtastplatte gemäß Figur 3 zur Erfassung der phasenverschobenen Teilstrahlenbündel bzw. acht vorliegenden Signalanteile eingesetzt werden kann, ist in Figur 5 dargestellt. Hierbei sei mit dem Bezugszeichen 20 eine Trägerplatine bezeichnet, auf der acht Detektorelemente 5 - 12, ausgebildet als Photoelemente angeordnet sind. Mit dem Bezugszeichen 1 ist in Figur 5 die Durchtrittsöffnung für die einfallenden Lichtbündel bezeichnet.
Die beiden in Summe verschalteten Detektorelemente 9, 10 liefern den mit 0°-Signal bezeichneten Signalanteil, die Detektorelemente 11, 12 den mit 90°-Signal bezeichneten Signalanteil, die Detektorelemente 5, 6 den mit 180°-Signal bezeichneten Signalanteil und die Detektorelemente 7, 8 den mit 270°-Signal bezeichneten Signalanteil.
Die auf die Detektorelemente 6, 8 und 5, 7 gelangenden Signalanteile stammen hierbei aus dem Teil-Abtastfeld 3a, die auf die Detektorelemente 10, 12 und 9, 11 gelangenden Signalanteile stammen aus dem Teil-Abtastfeld 3b.
Zur Erzeugung der gewünschten 0°- und 90°-Ausgangssignale werden die Detektorelement-Paare 5,6 und 9,10 in bekannter Art und Weise im Gegentakt verschaltet; ebenso erfolgt eine derartige Gegentaktverschaltung der Detektorelement-Paare 7,8 und 11,12. Während aus der ersten Verschaltung das 90°-Ausgangssignal resultiert, ergibt sich aus der zweiten Verschaltung das 0°-Ausgangssignal.

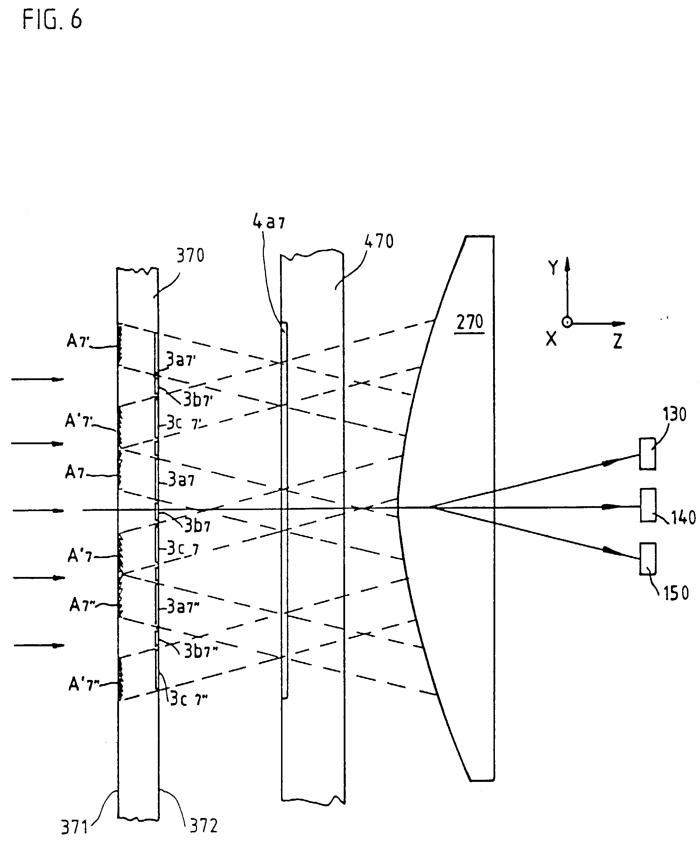

Eine weitere Ausführungsform der erfindungsgemäßen Längen- oder Winkelmeßeinrichtung ist in Figur 6 schematisiert dargestellt. Das dargestellte Ausführungsbeispiel unterscheidet sich von der vorab erläuterten Variante dadurch, daß es im Durchlicht arbeitet, das heißt der Maßstab 37 mit der periodischen Maßstabteilung 470 ist nicht reflektierend sondern durchlässig ausgebildet. Auf Seiten der Abtastplatte 370 sind wiederum auf Vorder- und Rückseite 371, 372 räumlich getrennt voneinander die richtungsselektiven Ablenkmittel A_{7'}, A'_{7'}, A₇, A'₇, A_{7"}, A'_{7"} sowie die entsprechend zugeordneten Teil-Abtastfelder 3a_{7'}, 3b_{7'}, 3c_{7'}, 3a₇, 3b₇, 3c₇, 3a_{7"}, 3b_{7"}, 3c_{7"} vorgesehen. Die Teil-Abtastfelder 3a₇, 3a_{7'}, 3a_{7"} sind gegenüber den Teil-Abtastfeldern 3b₇, 3b_{7'}, 3b_{7"} und den Teil-Abtastfeldern 3c₇, 3c_{7'}, 3c_{7"} jeweils um ein Drittel ihrer Teilungsperiode zueinander versetzt angeordnet und liefern somit drei um jeweils 120° zueinander phasenversetzte Abtastsignale.
Den Teil-Abtastfeldern 3a_{7'}, 3b_{7'}, 3c_{7'}, 3a₇, 3b₇, 3c₇, 3a_{7"}, 3b_{7"}, 3c_{7"} auf der Vorderseite 372 der Abtastplatte 370 sind analog zu den vorab erläuterten Ausführungsbeispielen auf der dem einfallenden, kollimierten Licht zugewandten Seite 371 der Abtastplatte 370 die Ablenkmittel A_{7'}, A'_{7'}, A₇, A'₇, A_{7"}, A'_{7"} zugeordnet, die die Überlagerung der verschiedenen Teil-Abtastfeldern 3a_{7'}, 3b_{7'}, 3c_{7'}, 3a₇, 3b₇, 3c₇, 3a_{7"}, 3b_{7"}, 3c_{7"} zugeordneten Teilstrahlenbündel auf gemeinsamen Bereichen der Maßstabteilung 4a7 bewirken. Ferner bewirken die Ablenkmittel A_{7'}, A'_{7'}, A₇, A'₇, A_{7"}, A'_{7"} die gewünschte Richtungsseparation der phasenverschobenen Teilstrahlenbündel, die in der Brennebene einer nachgeordneten Linse 270 auf drei entsprechend angeordnete Detektorelemente treffen, die eine Umwandlung der Signale in drei phasenverschobenen elektrische Signale bewirken.
Die Ablenkmittel A_{7'}, A'_{7'}, A₇, A'₇, A_{7"}, A'_{7"} sind in dieser Ausführungsform als geblazte Phasengitter ausgebildet, deren -1. Beugungsordnung optimiert ist und deren Teilungsperiode entsprechend der gewünschten Ablenkung gewählt wird.

## Patentansprüche

1. Photoelektrische Längen- oder Winkelmeßeinrichtung mit einem Maßstab (45, 4, 470) und mit einer Abtasteinheit mit mehreren, in Meßrichtung zueinander verschoben angeordneten Teil-Abtastfeldern (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) sowie den Teil-Abtastfeldern (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) zugeordneten Detektorelementen (5, 6, 7, 8, 9, 10, 11, 12), die bei der photoelektrischen Abtastung des Maßstabes (45, 4, 470) modulierte und phasenverschobene Ausgangssignale liefern, wobei den Teil-Abtastfeldern (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) desweiteren räumlich getrennte, richtungsselektiv wirkende Ablenkmittel (3d5. 3e5, 3f5; 3e, 3f ;A_{7'}, A'_{7'}, A₇, A'₇, A_{7"}, A'_{7"}) zugeordnet sind, die eine Ablenkung zumindest eines Teiles der durch die Teil-Abtastfelder (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) tretenden Teilstrahlenbündel in Richtung eines gemeinsam beaufschlagten Teilbereiches auf dem Maßstab (45, 4, 470) bewirken und wobei die Teil-Abtastfelder (3a, 3b; 3a_{7'}, 3b_{7'}, 3c_{7'}, 3a₇, 3b₇, 3c₇, 3a_{7"}, 3b_{7"}, 3c_{7"})und die Ablenkmittel (3e, 3f ;A_{7'}, A'_{7'}, A₇, A'₇, A_{7"}, A'_{7"}) senkrecht zur Meßrichtung (X) mehrfach wiederholt angeordnet sind.

2. Photoelektrische Längen- oder Winkelmeßeinrichtung nach Anspruch 1, wobei die Teil-Abtastfelder (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) und die richtungsselektiv wirkenden Ablenkmittel (3d5, 3e5, 3f5; 3e, 3f ;A_{7'}, A'_{7'}, A₇, A'₇, A_{7"}, A'_{7"}) auf der Vorder- und Rückseite eines gemeinsamen Trägersubstrates angeordnet sind.

3. Photoelektrische Längen- oder Winkelmeßeinrichtung nach Anspruch 1, wobei die richtungsselektiv wirkenden Ablenkmittel als Beugungsgitter ausgebildet sind.

4. Photoelektrische Längen- oder Winkelmeßeinrichtung nach Anspruch 3, wobei die verschiedenen Teil-Abtastfeldern (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) zugeordneten Beugungsgitter unterschiedliche Gitterkonstanten aufweisen.

5. Photoelektrische Längen- oder Winkelmeßeinrichtung nach Anspruch 1, wobei die richtungsselektiv wirkenden Ablenkmittel als diffraktive optische Elemente ausgebildet sind.

6. Photoelektrische Längen- oder Winkelmeßeinrichtung nach Anspruch 1, wobei die richtungsselektiv wirkenden Ablenkmittel als refraktive optische Elemente ausgebildet sind.

7. Photoelektrische Längen- oder Winkelmeßeinrichtung nach Anspruch 1, wobei die richtungsselektiv wirkenden Ablenkmittel (3d5, 3e5, 3f5; 3e, 3f) als binäre Stufengitter ausgebildet sind.

8. Photoelektrische Längen- oder Winkelmeßeinrichtung nach Anspruch 1, wobei die richtungsselektiv wirkenden Ablenkmittel als geblazte Phasenstrukturen (A_{7'}, A'_{7'}, A₇, A'₇, A_{7"}, A'_{7"}) ausgebildet sind.

9. Photoelektrische Längen- oder Winkelmeßeinrichtung nach Anspruch 1, wobei die richtungsselektiv wirkenden Ablenkmittel als holographisch optische Elemente ausgebildet sind.

10. Photoelektrische Längen- oder Winkelmeßeinrichtung nach Anspruch 1, wobei die Teil-Abtastfelder (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) parallel zueinander in Meßrichtung (X) angeordnet sind.

11. Photoelektrische Längen- oder Winkelmeßeinrichtung nach Anspruch 10, wobei symmetrisch zu einem mittleren Teil-Abtastfeld (3b5, 3a, 3b_{7"}) auf den beiden benachbarten Seiten die verschobenen weiteren Teil-Abtastfelder (3b; 3a5, 3c5; 3a_{7'}, 3b_{7'}, 3c_{7'}, 3a₇, 3b₇, 3c₇, 3a_{7"}, 3c_{7"}) angeordnet sind.

12. Photoelektrische Längen- oder Winkelmeßeinrichtung nach Anspruch 2 und 10, wobei auf der Rückseite des Trägersubstrates transversal zu den Teil-Abtastfeldern (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) Bereiche mit Ablenkmitteln angeordnet sind, die den verschiedenen Teil-Abtastfeldern (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) zugeordnet sind und jeweils unterschiedliche ablenkende Wirkung haben.

## Claims

1. A photoelectric length or angle measuring device, with a measuring scale (45, 4, 470) and a sensing unit with a plurality of sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) offset relative to one another in the measuring direction, as well as detector elements (5, 6, 7, 8, 9, 10, 11, 12) associated with the sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}), which detectors provide modulated and phase-shifted output signals during the photoelectric sensing of the measuring scale (45, 4, 470), wherein spatially separated, directionally selectively acting deflecting means (3d5, 3e5, 3f5; 3e, 3f; A_{7'}, A'_{7'}, A₇, A'₇, A_{7"}, A'_{7"}) are furthermore associated with the sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) and effect deflection of at least a part of the partial ray bundles passing through the sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) in the direction of a commonly affected sub-region on the measuring scale (45, 4, 470) and wherein the sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) and the deflecting means (3d5, 3e5, 3f5; 3e, 3f; A_{7'}, A'_{7'}, A₇, A'₇, A_{7"}, A'_{7"}) are arranged repeatedly a plurality of times perpendicular to the measuring direction (X).

2. A photoelectric length or angle measuring device according to claim 1, wherein the sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) and the directionally acting deflecting means (3d5, 3e5, 3f5; 3e, 3f; A_{7'}, A'_{7'}, A₇, A'₇, A_{7"}, A'_{7"}) are arranged on the front and rear sides of a common supporting substrate.

3. A photoelectric length or angle measuring device according to claim 1, wherein the directionally acting deflecting means are formed as a diffraction grating.

4. A photoelectric length or angle measuring device according to claim 3, wherein the diffraction gratings associated with the different sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) have different grating constants.

5. A photoelectric length or angle measuring device according to claim 1, wherein the directionally selectively acting deflecting means are in the form of diffractive optical elements.

6. A photoelectric length or angle measuring device according to claim 1, wherein the directionally selectively acting deflecting means are in the form of refractive optical elements.

7. A photoelectric length or angle measuring device according to claim 1, wherein the directionally selectively acting deflecting means (3d5, 3e5, 3f5; 3e, 3f) are in the form of binary echelons.

8. A photoelectric length or angle measuring device according to claim 1, wherein the directionally selectively acting deflecting means are in the form of blazed phase structures (A_{7'}, A'_{7'}, A₇, A'₇, A_{7"}, A'_{7"}).

9. A photoelectric length or angle measuring device according to claim 1, wherein the directionally selectively acting deflecting means are in the form of holographic optical elements.

10. A photoelectric length or angle measuring device according to claim 1, wherein the sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) are arranged parallel to one another in the measuring direction (X).

11. A photoelectric length or angle measuring device according to claim 10, wherein the offset further sensing sub-fields (3b; 3a5, 3c5; 3a_{7'}, 3b_{7'}, 3c_{7'}, 3a₇, 3b₇, 3c₇, 3a_{7"}, 3c_{7"}) are arranged on the two adjoining sides symmetrically relative to a central sensing sub-field (3b5, 3a, 3b_{7"}).

12. A photoelectric length or angle measuring device according to claims 2 and 10, wherein regions with deflecting means are arranged on the rear side of the supporting substrate, transverse to the sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) and are associated with the different sensing sub-fields (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) and each have a different deflecting action.

## Revendications

1. Dispositif photoélectrique de mesure de longueurs ou d'angles comprenant une règle (45, 4, 470) et une unité de lecture avec plusieurs champs de palpage partiels (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) décalés les uns par rapport aux autres dans la direction de mesure, ainsi que des éléments détecteurs (5, 6, 7, 8, 9, 10, 11, 12) associés aux champs de palpage partiels (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}), qui lors du palpage photoélectrique de la règle (45, 4, 470) produisent des signaux de sortie modulés et déphasés, dans lequel des moyens de déviation (3d5, 3e5, 3f5; 3e, 3f; A_{7'}, A'_{7'}, A₇, A'₇, A_{7"}, A'_{7"}) séparés dans l'espace, sélectifs en direction sont en outre associés aux champs de palpage partiels (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}), lesquels moyens de déviation provoquent une déviation d'au moins une partie des faisceaux de rayons partiels traversant les champs de palpage partiels (3a, 3b; 3a5, 3b5; 3a_{7'}, 3b_{7'}, 3c_{7'}, 3a₇, 3b₇, 3c₇, 3a_{7"}, 3b_{7"}, 3c_{7"}) en direction d'une zone partielle de la règle (45, 4, 470) éclairée conjointement et dans lequel les champs de palpage partiels (3a, 3b; 3a_{7'}, 3b_{7'}, 3c_{7'}, 3a₇, 3b₇, 3c₇, 3a_{7"}, 3b_{7"}, 3c_{7"}) et les moyens de déviation (3e, 3f; A_{7'}, A'_{7'}, A₇, A_{7'}, A_{7"}, A'_{7"}) sont disposés perpendiculairement à la direction de mesure (X) en se répétant plusieurs fois .

2. Dispositif photoélectrique de mesure de longueurs ou d'angles selon la revendication 1, dans lequel les champs de palpage partiels (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) et les moyens de déviation sélectifs en direction (3d5, 3e5, 3f5; 3e, 3f; A_{7'}, A'_{7'}, A₇, A'₇, A_{7"}, A'_{7"}) sont disposés sur la face avant et sur la face arrière d'un substrat support commun.

3. Dispositif photoélectrique de mesure de longueurs ou d'angles selon la revendication 1, dans lequel les moyens de déviation sélectifs sont agencés sous la forme de réseaux de diffraction.

4. Dispositif photoélectrique de mesure de longueurs ou d'angles selon la revendication 3, dans lequel les différents réseaux de diffraction associés aux champs de palpage partiels (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) présentent des constantes de réseau différentes.

5. Dispositif photoélectrique de mesure de longueurs ou d'angles selon la revendication 1, dans lequel les moyens de déviation sélectifs sont agencés sous la forme d'éléments optiques diffringents.

6. Dispositif photoélectrique de mesure de longueurs ou d'angles selon la revendication 1, dans lequel les moyens de déviation sélectifs sont agencés sous la forme d'éléments optiques réfringents.

7. Dispositif photoélectrique de mesure de longueurs ou d'angles selon la revendication 1, dans lequel les moyens de déviation sélectifs (3d5, 3e5, 3f5; 3e, 3f) sont agencés sous la forme de réseaux à échelons binaires.

8. Dispositif photoélectrique de mesure de longueurs ou d'angles selon la revendication 1, dans lequel les moyens de déviation sélectifs (A_{7'}, A'_{7'}, A₇, A₇, 3c₇, A_{7"}, A_{7"}) sont agencés sous la forme de strctures de phase à encoches.

9. Dispositif photoélectrique de mesure de longueurs ou d'angles selon la revendication 1, dans lequel les moyens de déviation sélectifs sont agencés sous la forme d'éléments optiques holographiques.

10. Dispositif photoélectrique de mesure de longueurs ou d'angles selon la revendication 1, dans lequel les champs de palpage partiels (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) sont disposés parallèlement les uns aux autres dans la direction de mesure (X).

11. Dispositif photoélectrique de mesure de longueurs ou d'angles selon la revendication 10, dans lequel les champs de palpage partiels (3b; 3a5, 3c5; 3a_{7'}, 3b_{7'}, 3c_{7'}, 3a₇, 3b₇, 3c₇, 3a_{7"}, 3b_{7"}, 3c_{7"}) sont disposés de manière symétrique des deux côtés d'un champ de palpage partiel (3a; 3b5; 3b_{7"}) médian.

12. Dispositif photoélectrique de mesure de longueurs ou d'angles selon les revendications 2 et 10, dans lequel le substrat-support porte sur sa face arrière, transversalement aux champs de palpage partiels (3a, 3b; 3a5, 3b5, 3c5; 3a_{7'}, 3b_{7'}, 3c_{7'}, 3a₇, 3b₇, 3c₇, 3a_{7"}, 3b_{7"}, 3c_{7"}) des zones pourvues de moyens de déviation, qui sont associées aux différents champs de palpage partiels (3a, 3b; 3a5, 3b5; 3a_{7'}, 3b_{7'}, 3c_{7'}, 3a₇, 3b₇, 3c₇, 3a_{7"}, 3b_{7"}, 3c_{7"}) et ont chacune une action de déviation différente.
